(19) Europäisches Patentamt

European Patent Office

Office européen des brevets

(11) **EP 1 112 979 B1**

(12) **EUROPEAN PATENT SPECIFICATION**

(45) Date of publication and mention
of the grant of the patent:
**09.06.2004 Bulletin 2004/24**

(51) Int Cl.⁷: $C03B\ 37/03$, C03B 37/07

(21) Application number: **00127808.4**

(22) Date of filing: **19.12.2000**

(54) **Method and device for controlling the tension applied to an optical fibre**

Verfahren und Vorrichtung zur Regelung der Zugspannung einer optischen Faser

Procédé et dispositif pour régler la tension appliquée à une fibre optique

(84) Designated Contracting States:
**AT BE CH CY DE DK ES FI FR GB GR IE IT LI LU MC NL PT SE TR**

(30) Priority: **29.12.1999 EP 99126119**

(43) Date of publication of application:
**04.07.2001 Bulletin 2001/27**

(73) Proprietor: **Pirelli & C. S.p.A.**
**20123 Milano (IT)**

(72) Inventors:
  • **Roba, Giacomo Stefano**
    **20052 Monza (Milano) (IT)**
  • **Pata, Roberto**
    **24121 Bergamo (IT)**
  • **Veronelli, Franco**
    **20020 Lainate (Milano) (IT)**

(74) Representative: **Giannesi, Pier Giovanni et al**
**Pirelli S.p.A.**
**Direzione Proprietà Industriale**
**Viale Sarca, 222**
**20126 Milano (IT)**

(56) References cited:
**EP-A- 0 254 462          EP-A- 0 483 661**
**US-A- 4 138 069          US-A- 5 790 292**

• **PATENT ABSTRACTS OF JAPAN vol. 1998, no. 5, 30 April 1998 (1998-04-30) & JP 10 001325 A (FUJIKURA LTD.), 6 January 1998 (1998-01-06)**

• **PATENT ABSTRACTS OF JAPAN vol. 1997, no. 4, 30 April 1997 (1997-04-30) & JP 08 324885 A (FURUKAWA ELECTRIC CO. LTD.), 10 December 1996 (1996-12-10)**

• **PATENT ABSTRACTS OF JAPAN vol. 12, no. 365, 29 September 1988 (1988-09-29) & JP 63 117925 A (SHOWA ELECTRIC WIRE & CABLE CO. LTD.), 21 May 1988 (1988-05-21)**

• **PATENT ABSTRACTS OF JAPAN vol. 12, no. 252, 15 July 1988 (1988-07-15) & JP 63 040741 A (SUMITOMO ELECTRIC IND. LTD.), 22 February 1988 (1988-02-22)**

• **PATENT ABSTRACTS OF JAPAN vol. 10, no. 245, 22 August 1986 (1986-08-22) & JP 61 077632 A (SUMITOMO ELECTRIC IND. LTD.), 21 April 1986 (1986-04-21)**

• **PATENT ABSTRACTS OF JAPAN vol. 10, no. 123, 8 May 1986 (1986-05-08) & JP 60 251145 A (SUMITOMO ELECTRIC IND. LTD.), 11 December 1985 (1985-12-11)**

• **PATENT ABSTRACTS OF JAPAN vol. 8, no. 172, 9 August 1984 (1984-08-09) & JP 59 069439 A (FURUKAWA ELECTRIC CO. LTD.), 19 April 1984 (1984-04-19)**

• **PATENT ABSTRACTS OF JAPAN vol. 7, no. 273, 6 December 1983 (1983-12-06) & JP 58 151342 A (NT&T CORP.), 8 September 1983 (1983-09-08)**

• **PATENT ABSTRACTS OF JAPAN vol. 7, no. 86, 9 April 1983 (1983-04-09) & JP 58 015042 A (NT&T CORP. ET AL.), 28 January 1983 (1983-01-28)**

EP 1 112 979 B1

**Description**

The present invention relates to an optical fibre tensioning device and a method of controlling the tension applied to an optical fibre, particularly during the winding of the fibre.

Typically, optical fibres are formed in draw towers from preforms of glass material. A draw tower is generally provided with a traction device ("capstan"), for example a motorized pulley, capable of drawing the optical fibre downwards and feeding it to a storage device; the latter usually comprises a motorized reel onto which the optical fibre is wound.

In many operating situations, the speed at which the optical fibre is drawn by the traction device (the drawing speed) may not coincide with the speed at which the optical fibre is fed into the storage device, for example owing to fluctuations of the speed of the motors which drive the traction device and the storage device. The difference between these speeds gives rise to variations of tension in the fibre with respect to a target tension; in particular, a fibre tension greater than the target tension may damage the fibre, while a tension lower than the target tension may make the storage process inefficient.

To solve this problem, there is a known practice of using tensioning devices which are to be interposed between the traction device and the storage device and are capable of controlling the tension of the optical fibre. In particular, there are known tensioning devices comprising at least one fixed pulley and one movable pulley which can guide the optical fibre. The movement of the movable pulley enables the tension of the optical fibre to be modified. Here and in the remainder of the description, the term "fixed pulley" denotes a pulley which is free to rotate about its axis and in which the position of the axis is fixed, while the term "movable pulley" denotes a pulley which is free to rotate about its axis and in which the position of the axis is variable.

US Patent 4,712,866 describes a tensioning device positioned between a traction device of a draw tower and a storage device comprising a take-up reel. This tensioning device comprises a pair of fixed pulleys and a movable pulley located on an oscillating arm, also called a "dancer arm", which carries a weight. The dancer arm actuates a conventional speed control so that the fibre is wound onto the take-up reel at a tension determined by the aforesaid weight.

US Patent 5,790,292 relating to an optical fibre transmission line describes, among other things, a draw tower in which a tensioning device with two pulleys is interposed between a traction device and a take-up reel (Figure 7).

US Patent 4,138,069 describes a winding device for optical glass filaments in which a traction device draws the filament from a source of molten glass and feeds it through a tensioning device to a set of take-up reels. The tensioning device comprises two fixed pulleys and one movable pulley mounted on one end of a dancer arm. The dancer arm extends from an apparatus in which a spring or other means applies a constant force to move the movable pulley away from the fixed pulleys.

Tensioning devices can also be used in apparatus other than draw towers.

US Patent 5,076,104 describes an apparatus for measuring the load at failure of an optical fibre, in which tensioning devices comprising a pair of fixed pulleys and one movable pulley are provided. Also provided is a tensioning device comprising one fixed grooved wheel and one movable grooved wheel; the latter is positioned below the fixed grooved wheel, is movable in a vertical direction and is connected to a predetermined weight. The optical fibre, which in its path is wound around both the fixed grooved wheel and the movable grooved wheel, is thus kept at a constant tension.

US Patent 4,505,222 describes an extrusion coating device for optical fibres, in which a tensioning device is positioned immediately upstream of a take-up reel.

US Patent 4,127,370 describes an extrusion coating apparatus for an optical fibre, in which a first, a second and a third pulley are positioned at the entry to the apparatus, immediately downstream of the fibre take-off reel. The first and second pulley are spaced apart from each other and from the take-off reel. The third pulley has no support and is carried on the optical fibre between the first and second pulley, in such a way that the fibre passes, as a result of the weight of the third pulley, along a U-shaped path between the first and second pulley. A pair of photocells is used to detect the vertical position of the third pulley and to control the speed of rotation of the take-off reel in such a way that the vertical position of the third pulley, and therefore the tension of the fibre, remains essentially constant.

The applicant has observed that tensioning devices of known types, requiring the use of gravity and/or predetermined elastic action for controlling the position of the movable pulley, apply an uncontrollable predetermined force to the movable pulley. Therefore it is not possible to modulate in any way the force applied to the movable pulley in order to modify the response of the tensioning device. Consequently, the tension control obtained by means of the known devices, being of the non-modulatable type, might be inadequate in some operating conditions.

The applicant has found that the aforesaid problem can be at least partially overcome by using an optical fibre tensioning device in which there is a movable pulley on which the optical fibre runs, a device for measuring the tension applied to the optical fibre and a device for moving the movable pulley, capable of controlling the position of the movable pulley in accordance with the signal generated by the tension measuring device.

The tensioning device according to the present invention is capable of receiving at its input an optical fibre from a fibre guide or return element or from a device of another type, for example a traction device or a take-off device, and is capable of supplying the optical fibre from its output, after having automatically controlled its tension, to a further guide or return element, or to a further device, for example a storage device (particularly a reeling device) for the optical fibre.

In greater detail, the tensioning device according to the present invention might comprise a fixed pulley carried by a supporting structure and a movable pulley carried by a slide which is slidable along a rectilinear guide carried by the supporting structure.

The optical fibre entering the tensioning device is wound around the fixed pulley for a certain length, and passes from here to the movable pulley around which it is wound for a further length. The distance between the axes of the fixed pulley and the movable pulley is variable to modify the length of the portion of fibre which extends between the two pulleys and consequently the tension applied to the fibre. To vary the distance between the axes of the fixed pulley and the movable pulley there are used, as mentioned above, a fibre tension measuring device, for example a load cell associated with the fixed pulley, and a device for moving the slide which can control the distance between the axes of the pulleys in accordance with the signal supplied by the tension measuring device, to automatically keep the tension in the fibre practically constant. The movement device can comprise an electric motor and a system for transmitting the motion from the motor to the slide, for example a screw and nut coupling in which the screw extends parallel to the rectilinear guide and is rotationally movable by the force of the motor and in which the nut is coupled to the slide, or a belt transmission, for example a toothed belt transmission.

Since it automatically controls the tension of the fibre without using the force of gravity or other predetermined forces, the aforesaid optical fibre tensioning device can be used to modulate in the desired way the tension applied to the optical fibre.

In this way, the movement of the movable pulley is made entirely independent of the force of gravity or predetermined elastic forces, and is achieved by the application of a controllable force.

Thus a tensioning device which automatically adapts itself to any variation of the operating conditions is provided.

Thus, in a first aspect, the present invention relates to an optical fibre tensioning device, for use in an optical fibre advance path, comprising at least one movable pulley around which the optical fibre is wound for a certain length at least; the position of the said movable pulley being variable to modify the tension applied to the optical fibre,

and additionally comprising a tension measuring device capable of measuring the said applied tension and of generating a signal indicating the tension, and a motorized device for moving the said movable pulley, capable of receiving the said signal indicating the tension and of moving the movable pulley in accordance with the said signal indicating the tension, to automatically keep the tension applied to the optical fibre essentially constant.

Preferably, the tensioning device also comprises a fixed pulley around which the optical fibre is wound for a certain length at least, the distance between the axes of the said fixed pulley and the said movable pulley being variable to modify the tension applied to the optical fibre, and the said motorized movement device being capable of controlling the said distance to automatically keep the tension applied to the optical fibre essentially constant.

The said motorized movement device may comprise a guide along which a slide supporting the said movable pulley can be moved and an actuator device for moving the said slide along the said guide.

The said actuator device may comprise a screw movable rotationally by the force of an electric motor and a nut connected to the said slide, or an electric motor and a motion transmission system of the belt type (for example, one using a toothed belt) to connect the motor to the slide.

The tensioning device may comprise an electronic control device which receives reference signals and measurement signals at its input, and is capable of generating, in response to the said input signals, operating signals for the closed-loop control of the said motorized movement device.

The said electronic control device is preferably a device for the closed-loop control of the tension applied to the optical fibre, comprising:

- a subtractor to which is supplied a tension reference signal, proportional to a target tension of the optical fibre, and a measurement signal, consisting of the said signal indicating the tension of the optical fibre; and
- a controller, preferably a proportional-integral derivative controller, receiving at its input a tension error signal supplied from the output of the said subtractor, and generating at its output a drive signal which can be used to operate the said motorized movement device and to control the said distance.

Thus a closed-loop control of the tension present in the fibre is provided, by means of which this tension is constantly monitored, causing an immediate intervention of the movement device whenever the measured tension deviates from the reference tension. The tension in the fibre is thus kept constantly equal to the reference tension, providing a particularly precise control.

Advantageously, the said tension measuring device may comprise a load cell connected to the said fixed pulley and capable of generating at its output the said signal indicating the tension.

Preferably, the said motorized movement device comprises a guide along which a slide supporting the said movable pulley can be moved, and an actuator device for moving the said slide along the said guide; the said electronic control device implementing a system for the closed-loop control of the position of the said slide along the said guide.

Preferably, the tensioning device is connected for operation to a device for storing the optical fibre, capable of receiving the optical fibre from the tensioning device, and the said system for the closed-loop control of the position of the said slide along the said guide comprises:

- a further subtractor to which is supplied a position reference signal, correlated with a reference position of the said slide along the said guide, and a measurement signal, proportional to the actual position of the said slide along the said guide; and
- a further controller, preferably a proportional-integral derivative controller, receiving at its input a position error signal supplied from the output of the said further subtractor, and generating at its output a further drive signal which can be used to operate the said storage device.

The said storage device preferably comprises at least one motorized reel on which the optical fibre from the said tensioning device is wound, the said motorized reel being rotationally movable about an axis of rotation under the action of an electric motor, and the said further drive signal being usable for the control of the said electric motor.

The said electronic control device preferably comprises an integrator receiving at its input a signal correlated with the speed of movement of the said slide along the said guide and generating at its output the said measurement signal proportional to the actual position of the said slide along the said guide.

In this way, it is ensured that the movable pulley is always kept in the proximity of a reference position from which it is always possible to move the movable pulley in a useful way to compensate for a variation of tension; thus the slide is not permitted to be positioned at a terminal position at which it is no longer possible to move the movable pulley in one of the directions of movement.

In a further aspect, the present invention relates to a method of controlling the tension applied to an optical fibre along a path of advance of an optical fibre, the said method comprising the stage of forming a portion of the said path having a length which can be varied to modify the tension applied to the said fibre, and the stages of measuring the tension applied to the optical fibre and controlling the said length in an automatic way, by means of a motor, in accordance with the said measured tension, to keep the tension of the optical fibre practically constant.

Preferably, the method comprises the stage of closed-loop control of the tension applied to the said optical fibre in accordance with at least one reference signal, proportional to a target tension of the fibre, and a measurement signal which is generated in this stage of measuring the tension and is proportional to the tension to which the optical fibre is actually subjected.

The said stage of closed-loop control of the tension preferably comprises the stages of:

- comparing the said tension reference signal with the said measurement signal, generating a tension error signal; and
- processing the said error signal, generating at the output a drive signal which can be used to modify the said length by means of a motor and to keep the tension in the fibre essentially constant.

The method preferably comprises the stage of closed-loop control of the position of a movable member in accordance with at least one position reference signal which is proportional to a target position of the said movable member, and a measurement signal which is proportional to the instantaneous position of the said movable member, the variation of the position of the said movable member causing the variation of the said length.

The method preferably also comprises the stage of storing the optical fibre at the end of the said advance path; the said stage of closed-loop control of the position of the said movable member comprises the stages of:

- comparing the said position reference signal with the said position measurement signal, generating a position error signal; and
- processing the said position error signal, generating at the output a drive signal which can be used to modify the speed at which the optical fibre is stored.

In a still further aspect, the present invention relates to an optical fibre processing system, for example a draw tower, an extrusion line or an apparatus for measuring the breaking strength of an optical fibre, in which there is an optical fibre tensioning device capable of receiving at its input an optical fibre from a source of optical fibre, for example an optical fibre traction device, and capable of supplying the optical fibre from its output to a device for storing the optical fibre, for example a motorized reel, the said tensioning device comprising at least one movable pulley around which the said optical fibre is wound for a certain length at least, the position of the said movable pulley being variable to modify the tension applied to the said fibre, the tensioning device additionally comprising a tension measuring device capable of measuring the said applied tension and of generating a signal indicating the tension, and a device for the motorized movement of the said movable pulley which is capable of receiving the said signal indicating the tension and of moving the movable pulley in accordance with the said signal indicating the tension to automatically keep the tension in the fibre practically constant.

Preferably, the system comprises an electronic control device capable of providing a system of closed-loop control of the tension applied to the optical fibre, and comprising:

- a subtractor to which is supplied a tension reference signal, proportional to a target tension of the optical fibre, and a measurement signal, consisting of the said signal indicating the tension; and
- a controller, preferably a proportional-integral derivative controller, receiving at its input a tension error signal supplied from the output of the said subtractor, and generating at its output a drive signal which can be used to operate the said motorized movement device.

Preferably, the said motorized movement device comprises a guide, along which a slide supporting the said movable pulley can be moved, and an actuator device for moving the said slide along the said guide; the said electronic control device providing a system of closed-loop control of the position of the said slide along the said guide.

Preferably, the tensioning device is connected for operation to the optical fibre storage device, and the said system for the closed-loop control of the position of the said slide along the said guide comprises:

- a further subtractor to which is supplied a position reference signal, correlated with a reference position of the said slide along the said guide, and a measurement signal, proportional to the actual position of the said slide along the said guide; and
- a further controller, preferably a proportional-integral derivative controller, receiving at its input a position error signal supplied from the output of the said further subtractor, and generating at its output a further drive signal which can be used to operate the said storage device.

The invention will now be illustrated with particular reference to the attached drawings which represent, without restriction, a preferred embodiment of the invention in which:

- Figure 1 shows, in plan view, a tensioning device for optical fibres, made according to the present invention; and
- Figure 2 shows a block diagram of an electronic unit for controlling the device of Figure 1, made according to the present invention.

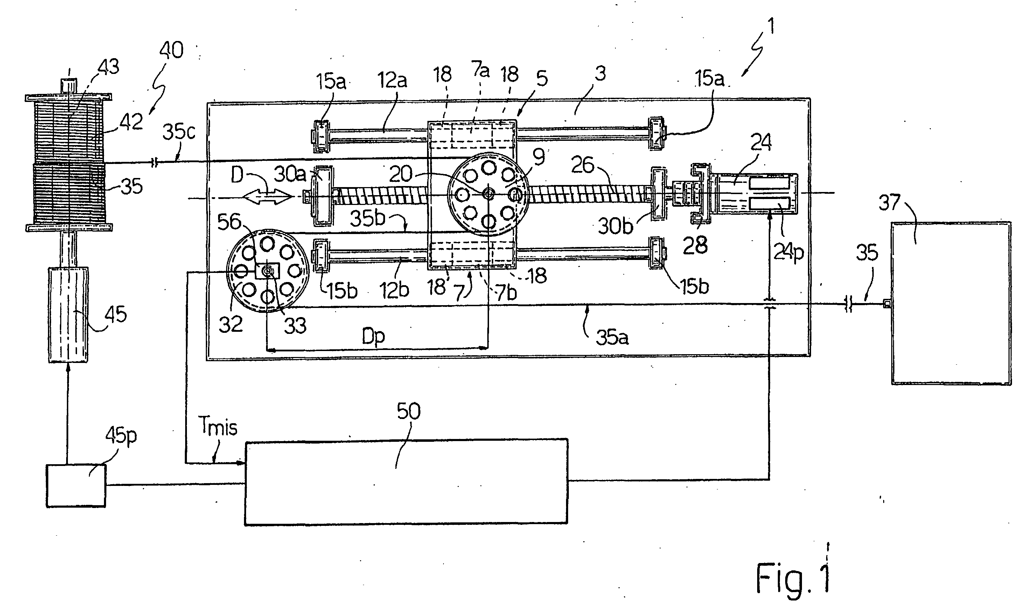

In Figure 1, the number 1 indicates, as a whole, an optical fibre tensioning device.

The tensioning device 1 comprises a supporting panel 3 (made from metal, for example) carried by a frame (not illustrated) which allows it to be positioned in a fixed way, for example in a horizontal or a vertical position.

The tensioning device 1 also comprises at least one rectilinear guide 5, which in this particular case is formed by two cylindrical rods 12a, 12b carried by the supporting panel 3, and a slide 7 movable with a reversible motion along the rectilinear guide 5 and supporting a first pulley 9, referred to hereafter as the movable pulley. The direction of movement of the slide 7 is indicated by D in Figure 1.

The cylindrical rods 12a, 12b are positioned parallel to each other, and have their respective end portions carried by pairs of supports 15a, 15b fixed to the supporting panel 3. The slide 7 can have a rectangular shape in plan view, and can be provided with sliding elements 7a, 7b engaged with the rods 12a, 12b respectively; for example, the slidable engagement between the slide 7 and the rods 12a, 12b can be formed by means of sliding bearings 18, or ball-bearing collars.

The movable pulley 9 is preferably carried by a pin 20 which extends from, and is perpendicular to, the slide 7, in such a way that the axis of rotation of the movable pulley 9 is perpendicular to the direction D of movement of the slide 7.

The slide 7 can be moved by the force of an electrical motor 24, preferably a motor having an output shaft connected to a screw 26 located between the rods 12a, 12b and extending parallel to these. The motor 24 can be mounted in a projecting way on a bracket 28 fixed to the panel 3, and the ends of the screw 26 are preferably supported by corresponding supports 30a, 30b which are also fixed to the panel 3. Advantageously, the screw 26 is coupled to a circulating ball nut (not illustrated) fixed to the slide 7 on the side opposite the movable pulley 9.

Alternatively, the transmission of motion from the motor 24 to the movable pulley 9 could be provided by means of a belt transmission, with a toothed belt for example (not illustrated).

The tensioning device 1 also comprises a second pulley 32, referred to hereafter as the fixed pulley, carried by a pin 33 which preferably extends perpendicularly to the panel 3, for example in a portion of the panel 3 opposite that occupied by the motor 24.

The fixed pulley 32 preferably has the same diameter as the movable pulley 9, and the axes of rotation of the pulleys 9 and 32 are preferably parallel to each other.

The angular rotation of the electric motor 24 produces the linear movement of the slide 7 along the guide 5, thus modifying the distance Dp between the axes of rotation of the movable pulley 9 and the fixed pulley 32.

In particular, the distance Dp is continuously variable between a minimum value (DpMin) for which the slide 7 is located at a first terminal position (not illustrated) in which it bears on the brackets 15a, 15b which are farther from the motor 24, and a maximum value (DpMax) for which the slide 7 is located at a second terminal position (not shown) at which it bears on the brackets 15a, 15b which are closer to the motor 24.

The tensioning device 1 can also comprise a transparent protective enclosure (carter - not shown) which can be connected to the supporting panel 3 and can house all the parts carried by the panel 3.

The tensioning device 1 is capable of being fitted in an advance path of an optical fibre 35, for example in a draw tower (not illustrated) for the optical fibre, and is capable of receiving the optical fibre from a source of optical fibre 37 (shown schematically). In the non-restrictive example considered here, the source of optical fibre 37 is a traction device ("capstan") of an optical fibre draw tower (not illustrated). Alternatively, the source of optical fibre 37 could be any member or device for returning or guiding the optical fibre, or an optical fibre take-off reel.

The optical fibre 35 extends from the traction device 37 to the fixed pulley 32, forming a first rectilinear portion 35a, is wound (through 180° for example) around the fixed pulley 32, extends between the fixed pulley 32 and the movable pulley 9, forming a second rectilinear portion 35b, is wound (through 180° for example) around the movable pulley 9, and finally extends between the movable pulley 9 and a further device 40, thus forming a third rectilinear portion 35c. In the non-restrictive example considered here, the device 40 (shown schematically) is a storage device comprising a motorized reel 42 on to which the optical fibre 35 can be wound. The motorized reel 42 is movable rotationally about an axis of rotation 43 under the action of an electric motor 45. Alternatively, the device 40 can be any member or device for returning or guiding the optical fibre.

Preferably, but not necessarily, the rectilinear portions 35a, 35b, 35c are parallel to each other.

Between the device 37 and the tensioning device 1, and between the tensioning device 1 and the device 40, there may advantageously be return pulleys which, for simplicity, are not shown in Figure 1.

An electronic control unit 50 is capable of controlling, through corresponding power driver circuits ("drivers") 24p, 45p, the electric motor 24 and the electric motor 45.

Advantageously, the tensioning device 1 comprises a tension measuring device 56, for example a load cell, preferably connected to the pin 33 of the fixed pulley 32. The tension measuring device 56 is capable of generating a signal Tmis proportional to the tension to which the optical fibre 35 is subjected, and is connected to the electronic control unit 50 to supply the signal Tmis to the electronic control unit 50.

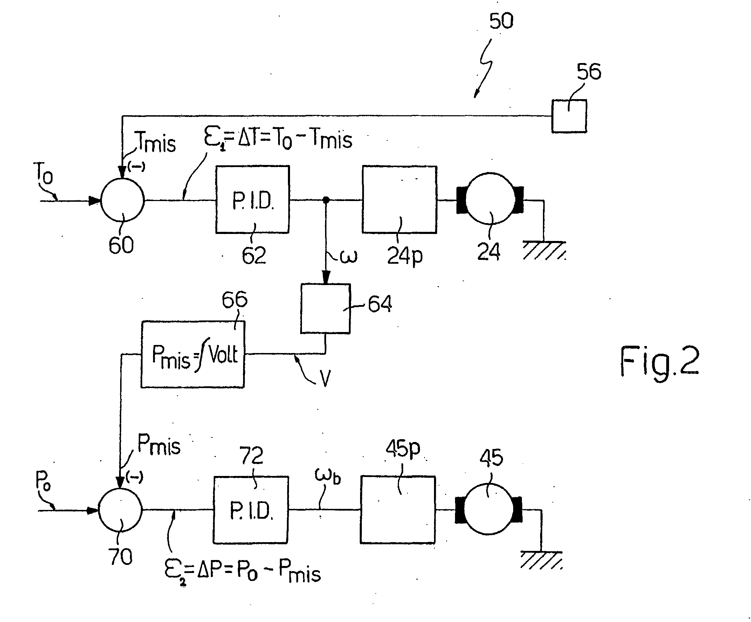

With particular reference to Figure 2, the electronic unit 50 is illustrated in detail. The electronic unit 50 comprises a subtractor 60 to which is supplied a signal $T_0$, proportional to a target tension of the fibre, and the signal Tmis, proportional to the tension to which the optical fibre 35 is actually subjected. The subtractor 60 generates at its output an error signal $\varepsilon_1 = \Delta T = T_0$ - Tmis (tension error) and supplies this error signal to a controller 62, particularly a PID (proportional-integral derivative) controller, which generates at its output a signal $\omega$ (a voltage signal, compatible with the drive circuit 24p which is operated by means of voltage).

A PID controller is a controller which, having received an input signal $S_i$, generates an output signal $S_o$, typically given by:

$$S_o(t) = K_p \cdot \left( S_i(t) + \frac{1}{T_i} \int_0^t S_i(t) \cdot dt + T_d \cdot \frac{dS_i(t)}{dt} \right).$$

A PID controller can therefore be identified by the three constants $K_p$, $K_i = K_p/T_i$ and $K_d = K_p \cdot T_d$.

The signal $\omega$ is used, after having been converted and transformed into a power signal by the drive circuit 24p (of a known type), to operate the motor 24. The speed of rotation of the motor 24 is therefore correlated with the signal $\omega$. The signal $\omega$ is also supplied to a conversion unit 64, which generates at its output a signal V correlated with the linear speed of movement of the slide 7 along the guide 5.

In practice, if $v_{max}$ is the maximum speed of the motor 24 (expressed in r.p.s.), $\omega_{max}$ is the (electric voltage) value of the signal $\omega$ with which the maximum speed $v_{max}$ is associated, p is the pitch of the screw 26 and $\omega(t)$ is the generic value of the signal $\omega$ at the instant t (supplied from the output of the controller 62), the conversion unit 64 generates at its output a signal V whose value V(t) at the instant t is given by:

$$V(t) = \frac{v_{max}}{\omega_{max}} \cdot \omega(t) \cdot p$$

In practice, the conversion unit 64 implements the transfer function which relates the angular rotation of the screw 26 to the linear speed of the slide 7.

The signal V is supplied to a further conversion unit 66, which, by integrating the signal V, generates at its output a signal Pmis (electric voltage) relating to the instantaneous position of the slide 7 along the guide 5.

The position signal Pmis is supplied to a subtractor 70 to which a signal $P_0$, proportional to a target position of the slide 7 along the guide 5, is also supplied. Preferably, the target position of the slide is the position intermediate between the first and second terminal positions.

The subtractor 70 generates at its output an error signal $\varepsilon_2 = \Delta P = P_0 - P_{mis}$, and supplies this error signal to a controller 72 (in particular, a PID (proportional-integral derivative) controller), which generates at its output a signal $\omega b$ which is used, after having been converted and transformed into a power signal by the drive circuit 45p (of a known type), to operate the motor 45. The signal $\omega b$ is correlated with the speed of rotation of the reel 42.

In operation, when the storage device imparts to the incoming optical fibre 35 a higher speed than the speed at which it is supplied from the output of the traction device 37, the tension Tmis in the fibre increases and deviates from the target value $T_0$.

Consequently, the tension error $\Delta T$ (which is negative in this case) increases in absolute value, and the controller 62, through the drive circuit 24p, causes a rotation of the motor 24 such that the slide 7 is made to move towards the first terminal position, and consequently the distance Dp and the length of the portion 35b of fibre located between the two pulleys 9 and 32 are decreased; the decrease of the length of the portion 35b is thus opposed to the increase of tension in the fibre, in such a way that the tension in the fibre is kept essentially constant.

Conversely, when the storage device 40 imparts to the incoming optical fibre 35 a lower speed than the speed at which it is supplied from the output of the traction device 37, the tension Tmis in the fibre decreases and deviates from the target value To. Consequently, the tension error $\Delta T$ (which is positive this time) increases, and the controller 62, through the drive circuit 24p, causes a rotation of the motor 24 such that the slide 7 is made to move towards the second terminal position, and consequently the distance Dp and the length of the portion 35b are increased; the increase of the length of the portion 35b is opposed to the decrease of tension in the fibre in such a way that the tension in the fibre is kept essentially constant.

Thus a motorized closed-loop control of tension is provided, which returns the tension in the fibre to the target value $T_0$.

Additionally, the unit 66, by integrating the signal V (correlated with the linear speed of the slide 7), determines the instantaneous position Pmis of the slide 7 along the guide 5. This instantaneous position is compared with the objective position $P_0$, and the position error $\Delta P$, processed by the conversion unit 72, produces a variation of the speed of rotation of the motor 45. In particular, when the slide 7 is closer than the reference position to the first terminal position (with the slide 7 moved to the left in Figure 1), the control system produces a decrease of the speed of rotation of the motor 45 in such a way that the tension in the fibre 35 decreases and the tension control loop, in order to compensate for this variation of tension, moves the slide 7 (by means of the motor 24 and the screw 26) towards the second terminal position (in other words to the right in Figure 1), thus compensating for the variation of position.

Additionally, when the slide 7 is closer than the reference position to the second terminal position (with the slide 7 moved to the right in Figure 1), the control system produces an increase of the speed of rotation of the motor 45 in such a way that the tension in the fibre 35 increases and the tension control loop, in order to compensate for this variation of tension, moves the slide 7 (by means of the motor 24 and the screw 26) towards the first terminal position (in other words to the left in Figure 1), thus compensating for the variation of position.

Thus a closed-loop position control is provided, which returns the slide to the target position $P_0$.

If preferred, the position controller could be dispensed with; in this case, the control device would not include the elements indicated by the numbers 64, 66, 70, 72 and 45p.

The above description clearly shows the advantages of the present invention, in that the movement of the movable pulley 9 depends solely on the action of the electric motor 24 and is entirely independent of the force of gravity or other predetermined forces (of the elastic type, for example) applied to the movable pulley 9. This, a force whose value can be automatically controlled in accordance with the operating signal applied to the motor 24 is applied to the optical fibre 35. The tensioning device 1 adapts itself automatically to any change in operating requirements (such as a change in the drawing speed, or a change in the position of the slide 7) and returns the value of the tension applied to the fibre to a target value.

Additionally, it is ensured that the movable pulley 9 is always kept close to a reference position (in particular, the central position of the guide 5) from which it can always be moved in a useful way (to the right or to the left) to effectively oppose a change in tension. In other words, the slide 7 is prevented from being positioned close to the first or second terminal position, where the movement of the slide in one of the two directions is no longer possible.

The tensioning device 1 can be used in apparatus of different types, for example in a draw tower, in an extrusion line or in a test apparatus (also known as a "screening apparatus") for testing the optical fibre in respect of the breaking stresses.

A draw tower typically comprises a furnace for melting a preform of glass material, a traction member (or "capstan", for example one of the single pulley or double pulley type) for drawing downwards the optical fibre generated from the melted preform, a coating device positioned between the furnace and the traction member to apply a protective surface coating (typically made from acrylate) to the optical fibre, and a fibre take-up reel receiving the fibre from the traction member. The tensioning device 1 can advantageously be positioned, as mentioned above, between the traction member and the take-up reel.

An extrusion line is a processing line along which a plurality of optical fibres are made to advance with a wire-shaped supporting element, and along which a polymer material is extruded over the supporting element in such a way as to incorporate the optical fibres and hold them in a fixed position around the supporting element, thus forming the optical core of an optical fable. An extrusion line typically comprises a take-off reel for the supporting element, a plurality of fibre take-off reels, an extruder capable of receiving both the fibres and the supporting element at its inlet, a cooling vessel receiving from the extruder the optical core formed in the extruder, and a final take-up reel. In an extrusion line, the tensioning device 1 can, for example, be positioned downstream of each of the fibre take-off reels.

A screening apparatus is typically used to check that the fibre is capable of withstanding predetermined tensions, and is therefore free of significant structural defects. A screen apparatus typically comprises a take-off reel for the optical fibre, a take-up reel for the optical fibre and a plurality of guide and/or return elements capable of forming a path for the optical fibre between the take-off and take-up reels and capable of imparting a predetermined tension to the optical fibre during its passage. In a screening apparatus, the device 1 can be positioned at any point of the aforesaid path.

Finally, it is clear that modifications and variations can be made to the tensioning device described without departing from the scope of protection of the present invention.

In particular, the system for moving the slide 7 (screw 26 and nut coupled to the slide 7) could be different from that described, and could comprise, for example, a toothed belt (not illustrated) connected to the slide 7 and movable between two end pulleys.

Finally, the position Pmis of the slide 7 along the guide 5 could be determined not in an indirect way (in other words, following the measurement of the speed) as illustrated in Figure 2, but in a direct way, using a row of position sensors (not illustrated), for example a row of photocells, or an optical strip (in other words a linear photosensitive component, for example a linear CCD - not illustrated), arranged along the guide 5.

## Claims

1.   Optical fibre tensioning device, for use in a path of advance of an optical fibre (35), comprising at least one movable pulley (9) around which the optical fibre (35) is wound for a certain length at least; the position of the said movable pulley (9) being variable to modify the tension applied to the optical fibre (35),
     **characterized in that** it comprises a tension measuring device (56) capable of measuring the said applied tension and of generating a signal indicating the tension (Tmis), and a motorized movement device (24, 26, 5, 7, 50) for the said movable pulley (9), capable of receiving the said signal indicating the tension (Tmis) and of moving the movable pulley in accordance with the said signal indicating the tension (Tmis), to automatically keep the tension applied to the optical fibre (35) essentially constant.

2.   Device according to Claim 1, **characterized in that** it also comprises a fixed pulley (32) around which the optical fibre (35) is wound for a certain length at least; the distance (Dp) between the axes (33, 20) of the said fixed pulley (32) and of the said movable pulley being variable to modify the tension applied to the optical fibre; the said motorized movement device (24, 26, 5, 7) being capable of controlling the said distance (Dp) to automatically keep the tension applied to the optical fibre essentially constant.

3.   Device according to Claim 1 or 2, **characterized in that** the said motorized movement device (24, 26, 5, 7) comprises a guide (5) along which a slide (7) supporting the said movable pulley (9) can be moved, and an actuator device (26, 24) for moving the said slide (7) along the said guide (5).

4.   Device according to Claim 3, **characterized in that** the said actuator device comprises a screw (26) which is rotationally movable under the force of an electric motor (24) and a nut coupled to the said slide (7).

5. Device according to Claim 3, **characterized in that** the said actuator device comprises an electric motor (24) and a motion transmission system of the belt type.

6. Device according to Claim 2, **characterized in that** it comprises an electronic control device (50) which receives reference signals ($T_0$, $P_0$) and measurement signals (Tmis, Pmis) at its input, and is capable of generating, in response to the said input signals, operating signals (24p, 45p) for the closed-loop control of the said motorized movement device (24, 26, 5, 7).

7. Device according to Claim 6, **characterized in that** the said electronic control device (50) forms a system for the closed-loop control of the tension applied to the said optical fibre (35), comprising:

   - a subtractor (60) to which is supplied a tension reference signal ($T_0$), proportional to a target tension of the optical fibre, and a measurement signal (Tmis), consisting of the said signal indicating the tension; and
   - a controller (62), receiving at its input a tension error signal ($\varepsilon_i = \Delta T = T_0 - Tmis$) supplied from the output of the said subtractor (60), and generating at its output a drive signal ($\omega$) which can be used to operate the said motorized movement device (24, 26, 5, 7) and to control the said distance (Dp).

8. Device according to Claim 7, **characterized in that** the said controller (62) comprises a proportional-integral derivative controller.

9. Device according to Claim 7, **characterized in that** the said tension measuring device (56) comprises a load cell (56) connected to the said fixed pulley (32) and capable of generating at its output the said signal indicating the tension (Tmis).

10. Device according to Claim 6 or 7, **characterized in that** the said motorized movement device (24, 26, 5, 7) comprises a guide (5) along which a slide (7) supporting the said movable pulley (9) can be moved, and an actuator device (26, 24) for moving the said slide (7) along the said guide (5); the said electronic control device (50) implementing a system for the closed-loop control of the position of the said slide (7) along the said guide (5).

11. Device according to Claim 10, **characterized in that** it is connected for operation to a device (40) for storing the optical fibre, capable of receiving the optical fibre from the tensioning device, and **in that** the said system for the closed-loop control of the position of the said slide (7) along the said guide (5) comprises:

   - a further subtractor (70) to which is supplied a position reference signal ($P_0$), correlated with a reference position of the said slide (7) along the said guide (5), and a measurement signal (Pmis), proportional to the actual position of the said slide (7) along the said guide (5); and
   - a further controller (72), receiving at its input a position error signal ($\varepsilon_2 = \Delta P = P_0 - Pmis$) supplied from the output of the said further subtractor (70), and generating at its output a further drive signal ($\omega b$) which can be used (45p) to operate the said storage device (40).

12. Device according to Claim 11, **characterized in that** the said further controller (72) comprises a proportional-integral derivative controller.

13. Device according to Claim 11, **characterized in that** the said storage device (40) comprises at least one motorized reel (42) on which the optical fibre (35) from the said tensioning device (1) is wound, the said motorized reel (42) being rotationally movable about an axis of rotation (43) under the action of an electric motor (45), and the said further drive signal ($\omega b$) being usable (45p) for the control of the said electric motor (45).

14. Device according to Claim 11, **characterized in that** the said electronic control device (50) comprises an integrator (66) receiving at its input a signal (V) correlated with the speed of movement of the said slide (7) along the said guide (5) and generating at its output the said measurement signal (Pmis) proportional to the actual position of the said slide (7) along the said guide (5).

15. Method of controlling the tension applied to an optical fibre along a path of advance of an optical fibre (35), the said method comprising the stage of forming a portion (35b) of the said path having a length (Dp) which can be varied to modify the tension applied to the said fibre,
   **characterized in that** it comprises the stage of measuring (56) the tension applied to the optical fibre and the stage of controlling the said length (Dp) in an automatic way, by means of a motor, in accordance with the said measured tension, to keep the tension applied to the optical fibre practically constant.

**16.** Method according to Claim 15, **characterized in that** it comprises the stage of closed-loop control of the tension applied to the said optical fibre in accordance with at least one reference signal ($T_0$), proportional to a target tension of the fibre, and a measurement signal (Tmis) which is generated in the said stage of measuring the tension and is proportional to the tension to which the optical fibre is actually subjected.

**17.** Method according to Claim 16, **characterized in that** the said stage of closed-loop control of the tension comprises the stages of:

- comparing (60) the said tension reference signal ($T_0$) with the said measurement signal (Tmis), generating a tension error signal ($\varepsilon_1 = \Delta T = T_0 - $ Tmis); and
- processing (62) the said error signal, generating at the output a drive signal ($\omega$) which can be used (24p) to modify the said length (Dp) by means of a motor and to keep the tension in the fibre essentially constant.

**18.** Method according to Claim 15, **characterized in that** it comprises the stage of closed-loop control of the position of a movable member (7) in accordance with at least one position reference signal ($P_0$) which is proportional to a target position of the said movable member, and a measurement signal (Pmis) which is proportional to the instantaneous position of the said movable member, the variation of the position of the said movable member (7) causing the variation of the said length (Dp).

**19.** Method according to Claim 18, **characterized in that** the optical fibre is stored at the end of the said advance path, and **in that** the said stage of closed-loop control of the position of the said movable member comprises the stages of:

- comparing (70) the said position reference signal ($P_0$) with the said position measurement signal (Pmis), generating a position error signal ($\varepsilon_2 = \Delta P = P_0 - $ Pmis); and
- processing (72) the said position error signal, generating at the output a drive signal ($\omega b$) which can be used (45p) to modify the speed at which the optical fibre is stored.

**20.** Optical fibre processing system, comprising a source of optical fibre (37), an optical fibre tensioning device (1) capable of receiving at its input the optical fibre (35) from the source of optical fibre (37), and an optical fibre storage device (40) capable of receiving the optical fibre from the tensioning device (1), the said tensioning device (1) comprising at least one movable pulley (9) around which the optical fibre (35) is wound, for a certain length at least; the position of the said movable pulley (9) being variable to modify the tension applied to the said optical fibre; the said system being **characterized in that** the said tensioning device (1) comprises a tension measuring device (56) capable of measuring the said applied tension and of generating a signal indicating the tension (Tmis), and a motorized movement device (7, 24, 26) capable of receiving the said signal indicating the tension and of moving the movable pulley (9) in accordance with the said signal indicating the tension, to automatically keep the tension in the fibre essentially constant.


**Patentansprüche**

**1.** Lichtleitfaser-Spannvorrichtung zur Verwendung in einem Zustellweg einer Lichtleitfaser (35), mit zumindest einer ortveränderlichen Rillenscheibe (9) um welche die Lichtleitfaser (35) zumindest um eine bestimmte Länge herumgeschlungen ist; wobei die Position der ortveränderlichen Rillenscheibe (9) variabel ist, um die auf die Lichtleitfaser (35) einwirkende Spannung zu ändern,
**dadurch gekennzeichnet, dass** eine Spannungsmessvorrichtung (56) vorgesehen ist, welche die angelegte Spannung messen kann, und ein die Spannung (Tmis) anzeigendes Signal erzeugen kann, sowie eine motorbetriebene Bewegungsvorrichtung (24, 26, 5, 7, 50) für die ortveränderbare Rillenscheibe (9), welche das die Spannung (Tmis) anzeigende Signal empfangen kann, und die ortsveränderbare Rillenscheibe entsprechend dem Signal bewegen kann, welches die Spannung (Tmis) anzeigt, um automatisch die auf die Lichtleitfaser (35) einwirkende Spannung im Wesentlichen konstant zu halten.

**2.** Vorrichtung nach Anspruch 1, **dadurch gekennzeichnet, dass** sie weiterhin eine ortsfeste Rillenscheibe (32) aufweist, um welche herum die Lichtleitfaser (35) zumindest über eine bestimmte Länge herumgeschlungen ist; wobei die Entfernung (Dp) zwischen den Achsen (33, 20) der ortsfesten Rillenscheibe (32) und der ortsveränderbaren Rillenscheibe variabel ist, um die auf die Lichtleitfaser einwirkende Spannung zu ändern; und die motorgetriebene Bewegungsvorrichtung (24, 26, 5, 7) dazu fähig ist, die Entfernung (Dp) zu steuern, um automatisch die auf die Lichtleitfaser einwirkende Spannung im Wesentlichen konstant zu halten.

3. Vorrichtung nach Anspruch 1 oder 2, **dadurch gekennzeichnet, dass** motorgetriebene Bewegungsvorrichtung (24, 26, 5, 7) eine Führung (5) aufweist, entlang derer ein Gleitstück (7), welches die ortsveränderbare Rillenscheibe (9) haltert, bewegt werden kann, sowie eine Stellgliedvorrichtung (26, 24) zum Bewegen des Gleitstücks (7) entlang der Führung (5).

4. Vorrichtung nach Anspruch 3, **dadurch gekennzeichnet, dass** die Stellgliedvorrichtung eine Spindel (26) aufweist, die durch die Kraft eines Elektromotors (24) und eine mit dem Gleitstück (7) gekoppelte Mutter drehbeweglich ist.

5. Vorrichtung nach Anspruch 3, **dadurch gekennzeichnet, dass** die Stellgliedvorrichtung einen Elektromotor (24) und ein Bewegungsübertragungssystem des Riementyps aufweist.

6. Vorrichtung nach Anspruch 2, **dadurch gekennzeichnet, dass** eine elektronische Steuervorrichtung (50) vorgesehen ist, welche Bezugsignale ($T_0$, $P_0$) und Messsignale (Tmis, Pmis) an ihrem Eingang empfängt, und welche in Reaktion auf die Eingangssignale Betriebssignale (24p, 45p) für die Regelung der motorgetriebenen Bewegungsvorrichtung (24, 26, 5, 7) erzeugen kann.

7. Vorrichtung nach Anspruch 6, **dadurch gekennzeichnet, dass** die elektronische Steuervorrichtung (50) ein System für die Regelung der Spannung bildet, die auf die Lichtleitfaser (35) einwirkt, welches aufweist:

   - einen Subtrahierer (60), welchem ein Spannungsbezugssignal ($T_0$) zugeführt wird, das proportional zu einer Sollspannung der Lichtleitfaser ist, sowie ein Messsignal (Tmis), welches aus dem die Spannung anzeigenden Signal besteht; und
   - eine Steuerung (62), die an ihrem Eingang ein Spannungsfedersignal ($\varepsilon_1 = \Delta T = T_0 - Tmis$) empfängt, das von dem Ausgang des Subtrahierers (60) geliefert wird, und welche an ihrem Ausgang ein Treibersignal ($\omega$) erzeugt, das dazu verwendet werden kann, die motorgetriebene Bewegungsvorrichtung (24, 26, 5, 7) zu betreiben, und die Entfernung (Dp) zu steuern.

8. Vorrichtung nach Anspruch 7, **dadurch gekennzeichnet, dass** die Steuerung (62) eine Proportional-Integral-Differential-Steuerung aufweist.

9. Vorrichtung nach Anspruch 7, **dadurch gekennzeichnet, dass** die Spannungsmessvorrichtung (56) eine Messdose (56) aufweist, die an die ortsfeste Rillenscheibe (32) angeschlossen ist, und an ihrem Ausgang das die Spannung (Tmis) erzeugende Signal erzeugen kann.

10. Vorrichtung nach Anspruch 6 oder 7, **dadurch gekennzeichnet, dass** die motorgetriebene Bewegungsvorrichtung (24, 26, 5, 7) eine Führung (5) aufweist, entlang derer ein Gleitstück (7) bewegt werden kann, welches die ortsveränderbare Rinnenscheibe (9) haltert, sowie eine Stellgliedvorrichtung (26, 24) zum Bewegen des Gleitstücks (7) entlang der Führung (5); wobei die elektronische Steuervorrichtung (50) ein System für die Regelung der Position des Gleitstücks (7) entlang der Führung (5) implementiert.

11. Vorrichtung nach Anspruch 10, **dadurch gekennzeichnet, dass** sie betriebsmäßig mit einer Vorrichtung (40) zum Aufbewahren der Lichtleitfaser verbunden ist, welche die Lichtleitfaser von der Spannvorrichtung empfangen kann, und dass das System für die Regelung der Position des Gleitstücks (7) entlang der Führung (5) aufweist:

   - einen weiteren Subrahierer (70), welchem ein Positionsbezugssignal ($P_0$) zugeführt wird, das mit einer Bezugsposition des Gleitstücks (7) entlang der Führung (5) korreliert ist, sowie ein Messsignal (Pmis), das proportional zur tatsächlichen Position des Gleitstücks (7) entlang der Führung (5) ist;

   - eine weitere Steuerung (72), die an ihrem Eingang ein Positionsfehlersignal ($\varepsilon_2 = \Delta P = P_0 - Pmis$) empfängt, das vom Ausgang des weiteren Subtrahierers (70) geliefert wird, und welche an ihrem Ausgang ein weiteres Treibersignal ($\omega b$) erzeugt, das dazu verwendet werden kann (45p), die Aufbewahrungsvorrichtung (40) zu betreiben.

**12.** Vorrichtung nach Anspruch 11, **dadurch gekennzeichnet, dass** die weitere Steuerung (72) eine Proportional-Integral-Differential-Steuerung aufweist.

**13.** Vorrichtung nach Anspruch 10, **dadurch gekennzeichnet, dass** die Aufbewahrungsvorrichtung (40) zumindest eine motorgetriebene Aufwickelrolle (42) aufweist, auf welche die Lichtleitfaser (35) von der Spannvorrichtung (1) aufgewickelt wird, wobei die motorgetriebene Aufwickelrolle (42) um eine Drehachse (43) unter Einwirkung eines Elektromotors (45) drehbeweglich ist, und das weitere Treibersignal ($\omega$b) nutzbar (45p) für die Steuerung des Elektromotors (45) ist.

**14.** Vorrichtung nach Anspruch 11, **dadurch gekennzeichnet, dass** die elektronische Steuervorrichtung (50) einen Integrator (60) aufweist, der an seinem Eingang ein Signal (V) empfängt, das mit der Geschwindigkeit der Bewegung des Gleitstücks (7) entlang der Führung (5) korreliert ist, und an seinem Ausgang das Messsignal (Pmis) erzeugt, das proportional zur tatsächlichen Position des Gleitstücks (7) entlang der Führung (5) ist.

**15.** Verfahren zum Steuern der Spannung, die auf eine Lichtleitfaser entlang einem Zustellweg einer Lichtleitfaser (35) einwirkt, wobei das Verfahren den Schritt umfasst, einen Abschnitt (35b) des Weges auszubilden, der eine Länge (Dp) aufweist, welche variiert werden kann, um die auf die Lichtleitfaser einwirkende Spannung zu ändern, **dadurch gekennzeichnet, dass** es den Schritt umfasst, die auf die Lichtleitfaser einwirkende Spannung zu messen (56), sowie den Schritt, die Länge (Dp) automatisiert zu steuern, mithilfe eines Motors, entsprechend der gemessenen Spannung, um die auf die Lichtleitfaser einwirkende Spannung praktisch konstant zu halten.

**16.** Verfahren nach Anspruch 15, **dadurch gekennzeichnet, dass** es den Schritt der Regelung der auf die Lichtleitfaser einwirkenden Spannung entsprechend zumindest einem Bezugssignal ($T_0$) umfasst, das proportional zu einer Sollspannung der Faser ist, und entsprechend einem Messsignal (Dmis), das in dem Schritt der Messung der Spannung erzeugt wird, und proportional zu der Spannung ist, welcher die Lichtleitfaser tatsächlich ausgesetzt ist.

**17.** Verfahren nach Anspruch 16, **dadurch gekennzeichnet, dass** der Schritt der Regelung der Spannung folgende Schritte umfasst:

- Vergleichen (60) des Spannungsbezugssignals (T0) mit dem Messsignal (Tmis), wobei ein Spannungsfehlersignal ($\varepsilon_1 = \Delta T = T_0 - Tmis$) erzeugt wird$\Delta$; und

- Verarbeiten (62) des Fehlersignals, wobei am Ausgang ein Treibersignal ($\omega$) erzeugt wird, das dazu verwendet werden kann (24p), die Länge (Dp) mithilfe eines Motors zu ändern, und die Spannung in der Lichtleitfaser im Wesentlichen konstant zu halten.

**18.** Verfahren nach Anspruch 15, **dadurch gekennzeichnet, dass** es den Schritt der Regelung der Position eines ortveränderbaren Teils (7) entsprechend zumindest einem Positionsbezugssignal ($P_0$) umfasst, das proportional zu einer Sollposition des ortveränderbaren Teils ist, und entsprechend einem Messsignal (Pmis), das proportional zur momentanen Position des ortveränderbaren Teils ist, wobei die Änderung der Position des ortveränderbaren Teils (7) die Änderung der Länge (Dp) hervorruft.

**19.** Verfahren nach Anspruch 18, **dadurch gekennzeichnet, dass** die Lichtleitfaser an dem Ende des Zustellweges aufbewahrt wird, und dass der Schritt der Regelung der Position des ortveränderbaren Teils folgende Schritte umfasst:

- Vergleichen (70) des Positionsbezugssignals ($P_0$) mit dem Positionsmesssignal (Pmis), wobei ein Positionsfehlersignal ($\varepsilon_2 = \Delta P = P_0 - Pmis$) erzeugt wird; und

- Verarbeitung (72) des Positionsfehlersignals, wobei am Ausgang ein Treibersignal ($\omega$b) erzeugt wird, das dazu verwendet werden kann (45p), die Geschwindigkeit zu ändern, mit welcher die Lichtleitfaser aufbewahrt wird.

**20.** Lichtleitfaser-Bearbeitungssystem, welches eine Quelle (37) für eine Lichtleitfaser aufweist, eine Lichtleitfaser-Spannvorrichtung (1), die an ihrem Eingang die Lichtleitfaser (35) von der Quelle (37) für die Lichtleitfaser empfangen kann, und eine Lichtleitfaser-Aufbewahrungsvorrichtung (40), welche die Lichtleitfaser von der Spannvorrichtung (1) empfangen kann, wobei die Spannvorrichtung (1) zumindest eine ortsveränderbare Rillenscheibe (9) aufweist, um welche die Lichtleitfaser (35) herumgeschlungen ist, zumindest über eine bestimmte Länge; die Position der ortveränderbaren Rillenscheibe (9) änderbar ist, um die auf die Lichtleitfaser einwirkende Spannung zu ändern; wobei das System **dadurch gekennzeichnet ist, dass** die Spannvorrichtung (1) eine Spannungsmessvorrichtung (56) aufweist, welche die angelegte Spannung messen kann, und ein die Spannung (Tmis) anzeigendes Signal erzeugen kann, sowie eine motorgetriebene Bewegungsvorrichtung (7, 24, 26), welche das die Spannung anzeigende Signal empfangen kann, und welche die ortsveränderbare Rillenscheibe (9) entsprechend dem die Spannung anzeigenden Signal bewegen kann, um automatisch die Spannung in der Faser im Wesentlichen konstant zu halten.

**Revendications**

1.  Dispositif de mise sous tension d'une fibre optique, destiné à être utilisé dans un chemin d'avance d'une fibre optique (35), comprenant au moins une poulie mobile (9) autour de laquelle la fibre optique (35) est enroulée sur une certaine longueur au moins ; la position de ladite poulie mobile (9) étant variable pour modifier la tension appliquée à la fibre optique (35),
    **caractérisé en ce qu'**il comprend un dispositif de mesure de tension (56) pouvant mesurer ladite tension appliquée et générer un signal indiquant la tension (Tmis), et un dispositif de mouvement motorisé (24, 26, 5, 7, 50) pour ladite poulie mobile (9), pouvant recevoir ledit signal indiquant la tension (Tmis) et déplacer la poulie mobile en fonction dudit signal indiquant la tension (Tmis), pour automatiquement garder la tension appliquée à la fibre optique (35) sensiblement constante.

2.  Dispositif selon la revendication 1, **caractérisé en ce qu'**il comprend aussi une poulie fixe (32) autour de laquelle la fibre optique (35) est enroulée sur une certaine longueur au moins ; la distance (Dp) entre les axes (33,20) de ladite poulie fixe (32) et de ladite poulie mobile étant variable pour modifier la tension appliquée à la fibre optique ; ledit dispositif de mouvement motorisé (24, 26, 5, 7) pouvant commander ladite distance (Dp) pour garder automatiquement la tension appliquée à la fibre optique essentiellement constante.

3.  Dispositif selon la revendication 1 ou 2, **caractérisé en ce que** ledit dispositif de mouvement motorisé (24, 26, 5, 7) comprend un guide (5) le long duquel un tiroir (7) supportant ladite poulie mobile (9) peut être déplacé, et un dispositif d'actionnement (26, 24) pour déplacer ledit tiroir (7) le long dudit guide (5).

4.  Dispositif selon la revendication 3, **caractérisé en ce que** ledit dispositif d'actionnement comprend une vis (26) qui est mobile en rotation sous la force d'un moteur électrique (24) et un écrou couplé au dit tiroir (7).

5.  Dispositif selon la revendication 3, **caractérisé en ce que** ledit dispositif d'actionnement comprend un moteur électrique (24) et un système de transmission de mouvement du type à courroie.

6.  Dispositif selon la revendication 2, **caractérisé en ce qu'**il comprend un dispositif de commande électronique (50) qui reçoit des signaux de référence ($T_0$, $P_0$) et des signaux mesurés (Tmis, Pmis) comme entrées, et qui peut générer, en réponse auxdits signaux d'entrée, des signaux de fonctionnement (24p, 45p) pour la commande en boucle fermée dudit dispositif de mouvement motorisé (24, 26, 5, 7).

7.  Dispositif selon la revendication 6, **caractérisé en ce que** ledit dispositif de commande électronique (50) forme un système pour la commande en boucle fermée de la tension appliquée à ladite fibre optique (35), comprenant :

    un soustracteur (60) auquel est fourni un signal de tension de référence ($T_0$), proportionnel à une tension cible de la fibre optique, et un signal mesuré (Tmis), consistant au dit signal indiquant la tension ; et
    une commande (62), recevant comme entrée un signal d'erreur de tension ($\varepsilon_1 = \Delta T = T_0 - Tmis$) fourni depuis la sortie dudit soustracteur (60), et générant à sa sortie un signal de commande ($\omega$) qui peut être utilisé pour faire fonctionner ledit dispositif de mouvement motorisé (24, 26, 5, 7) et pour commander ladite distance (Dp).

8.  Dispositif selon la revendication 7, **caractérisé en ce que** ladite commande (62) comprend une commande de type PID.

9.  Dispositif selon la revendication 7, **caractérisé en ce que** ledit dispositif de mesure de tension (56) comprend une cellule de charge (56) connectée à ladite poulie fixe (32) et pouvant générer à sa sortie ledit signal indiquant la tension (Tmis).

**10.** Dispositif selon la revendication 6 ou 7, **caractérisé en ce que** ledit dispositif de mouvement motorisé (24, 26, 5, 7) comprend un guide (5) le long duquel un tiroir (7) supportant ladite poulie mobile (9) peut être déplacée, et un dispositif d'actionnement (26, 24) pour déplacer ledit tiroir (7) le long dudit guide (5) ; ledit dispositif de commande électronique (50) mettant en oeuvre un système pour la commande en boucle fermée de la position dudit tiroir (7) le long dudit guide (5).

**11.** Dispositif selon la revendication 10, **caractérisé en ce qu'**il est connecté en fonctionnement à un dispositif (40) pour stocker la fibre optique, pouvant recevoir la fibre optique du dispositif de mise sous tension, et **en ce que** ledit système pour la commande en boucle fermée de la position dudit tiroir (7) le long dudit guide (5) comprend :

un autre soustracteur (70) auquel est fourni un signal de position de référence ($P_0$), corrélé à une position de référence dudit tiroir (7) le long dudit guide (5), et un signal mesuré (Pmis), proportionnel à la position réelle dudit tiroir (7) le long dudit guide (5) ; et
une autre commande (72), recevant comme entrée un signal d'erreur de tension ($\varepsilon_2 = \Delta P = P_0$ - Pmis) fourni depuis la sortie dudit soustracteur (70), et générant à sa sortie un autre signal de commande ($\omega$b) qui peut être utilisé (45p) pour faire fonctionner ledit dispositif de stockage (40).

**12.** Dispositif selon la revendication 11, **caractérisé en ce que** ladite autre commande (72) comprend une commande PID.

**13.** Dispositif selon la revendication 11, **caractérisé en ce que** ledit dispositif de stockage (40) comprend au moins une poulie motorisée (42) sur lequel la fibre optique (35) depuis ledit dispositif de mise sous tension (1) est enroulée, ladite poulie motorisée (42) étant mobile en rotation autour d'un axe de rotation (43) sous l'action d'un moteur électrique (45), et ledit autre signal de commande ($\omega$b) pouvant être utilisé (45p) pour la commande dudit moteur électrique (45).

**14.** Dispositif selon la revendication 11, **caractérisé en ce que** ledit dispositif de commande électronique (50) comprend un intégrateur (66) recevant à son entrée un signal (V) corrélé avec la vitesse du mouvement dudit tiroir (7) le long dudit guide (5) et générant à sa sortie ledit signal de mesure (Pmis) proportionnel à la position réelle dudit tiroir (7) le long dudit guide (5).

**15.** Procédé pour commander la tension appliquée à une fibre optique le long d'un chemin d'avance d'une fibre optique (35), ledit procédé comprenant l'étape consistant à former une partie (35b) dudit chemin ayant une longueur (Dp) qui peut être modifiée pour modifier la tension appliquée à ladite fibre,
**caractérisé en ce qu'**il comprend l'étape consistant à mesurer (56) la tension appliquée à la fibre optique et l'étape consistant à commander ladite longueur (Dp) de manière automatique, au moyen d'un moteur, en fonction de ladite tension mesurée, pour garder la tension appliquée à la fibre optique pratiquement constante.

**16.** Procédé selon la revendication 15, **caractérisé en ce qu'**il comprend l'étape de commande en boucle fermée de la tension appliquée à ladite fibre optique en fonction d'au moins un signal de référence ($T_0$), proportionnel à une tension cible de la fibre, et un signal mesuré (Tmis) qui est généré dans ladite étape de mesure de la tension et est proportionnel à la tension à laquelle la fibre optique est réellement soumise.

**17.** Procédé selon la revendication 16, **caractérisé en ce que** ladite étape de commande en boucle de la tension comprend les étapes consistant à :

comparer (60) ledit signal de tension de référence ($T_0$) audit signal mesuré (Tmis), générer un signal d'erreur de tension ($\varepsilon_1 = \Delta T = T_0$ - Tmis) ; et
traiter (62) ledit signal d'erreur, générer à la sortie un signal de commande ($\omega$) qui peut être utilisé (24p) pour modifier ladite longueur (Dp) au moyen d'un moteur et pour garder la tension dans la fibre sensiblement constante.

**18.** Procédé selon la revendication 15, **caractérisé en ce qu'**il comprend l'étape de commande en boucle fermée de la position d'un élément mobile (7) en fonction d'au moins un signal de position de référence ($P_0$) qui est proportionnel à une position cible dudit élément mobile, et un signal mesuré (Pmis) qui est proportionnel à la position instantanée dudit élément mobile, la variation de la position dudit élément mobile (7) causant la variation de ladite longueur (Dp).

**19.** Procédé selon la revendication 18, **caractérisé en ce que** la fibre optique est stockée à l'extrémité dudit chemin d'avance, et **en ce que** ladite étape de commande en boucle fermée de la position dudit élément mobile comprend les étapes consistant à :

comparer (70) ledit signal de position de référence ($P_0$) audit signal mesuré de position (Pmis), générer un signal d'erreur de tension ($\varepsilon_2 = \Delta P = P_0$ - Pmis) ; et
traiter (72) ledit signal d'erreur de position, générer à la sortie un signal de commande ($\omega$b) qui peut être utilisé (45p) pour modifier la vitesse à laquelle la fibre optique est stockée.

**20.** Système de traitement de fibre optique, comprenant une source de fibre optique (37), un dispositif de mise sous tension de fibre optique (1) pouvant recevoir à son entrée la fibre optique (35) de la source de fibre optique (37), et un dispositif de stockage de fibre optique (40) pouvant recevoir la fibre optique du dispositif de mise sous tension (1), ledit dispositif de mise sous tension (1) comprenant au moins une poulie mobile (9) autour de laquelle la fibre optique (35) est enroulée, pour une certaine longueur au moins ; la position de ladite poulie mobile (9) étant variable pour modifier la tension appliquée à ladite fibre optique ; ledit système étant **caractérisé en ce que** le dispositif de mise sous tension (1) comprend un dispositif de mesure de tension (56) pouvant mesurer ladite tension appliquée et générer un signal indiquant la tension (Tmis), et un dispositif de mouvement motorisé (24, 26, 7) pouvant recevoir ledit signal indiquant la tension et déplacer la poulie mobile (9) en fonction dudit signal indiquant la tension, pour garder automatiquement la tension dans la fibre sensiblement constante.

Fig. 1

Fig.2